# EUROPEAN PATENT APPLICATION

(11) **EP 2 549 684 A1**
(43) Date of publication of application: **23.01.2013**
(21) Application number: 10849715.7
(22) Date of filing: 20.08.2010
(51) Int. Cl.: H04L 12/28

(54) **DEVICE, SYSTEM AND METHOD FOR REALIZING THE INTELLIGENT HOME APPLICATION**

(30) Priority: 13.04.2010 CN 201010146351
(71) Applicant: ZTE Corporation, Shenzhen, Guangdong 518057 (CN)
(72) Inventor: LI, Weihua, Shenzhen Guangdong 518057 (CN)
(74) Representative: Howson, Richard G.B.
(86) International application number: PCT/CN2010/076213
(87) International publication number: WO 2011/127706

(57) **Abstract**

The disclosure discloses a device, system and method for implementing a smart home application, wherein a home gateway can always be connected with one or more terminal equipments, and can perform conversion of a message between a home control centre and the terminal equipment, and send the converted message to the home control centre or the terminal equipment; the home control centre can then execute a smart home service logic according to a received user instruction or a preconfigured task, and can further send an instruction to one or more terminal equipments through the home gateway so as to implement the smart home application through execution of the terminal equipment. With the device, system and method in the disclosure, the smart home application can be implemented based on unified control of terminal equipments.

## Description

### TECHNICAL FIELD

The disclosure relates to the field of a smart home application, particularly to a device, system, and method for implementing a smart home application.

### BACKGROUND

Early smart home is relatively mono-functional, and it is essentially the same in concept as home automation or a digital home or a home network.

Presently, people raise higher requirements on the smart home, where a house is taken as a platform of multifunction of building, network communications, information appliances, and equipment automation, and integration of system, structure, service, and management, with advantages such as high efficiency, comfort, security, convenience, environmental friendliness, etc.; In addition, convenient and comfortable living environment with easy external communication and easy internal controllability may be achieved through network integration, screen, information and other like aspects to control a terminal equipment in performing a smart home application. Moreover, the smart home is required to integrate more new terminals and services.

Accordingly, in order to implement numerous functions of the smart home, there is a need for smart home application techniques with easy expansion of services and easy network integration to meet with Ubiquitous-Network-based requirements on smart home, whereas no relevant technical support currently exists.

### SUMMARY

Accordingly, the main objective of the disclosure is to provide a device and system for implementing a smart home application, so as to implement the smart home application based on unified control of terminal equipments.

Another objective of the disclosure is to provide a method for implementing a smart home application, wherein the smart home application can also be implemented based on unified control of terminal equipments.

To achieve the above objectives, the technical solutions of the disclosure can be implemented as follows.

A device for implementing a smart home application comprises a home gateway and a home control centre;
the home gateway is connected with one or more terminal equipments, and is configured to perform conversion of a message between the home control centre and the terminal equipment and to send the converted message to the home control centre or the terminal equipment; and
the home control centre is configured to execute a smart home service logic according to a received user instruction or a preconfigured task and to send an instruction to one or more terminal equipments through the home gateway so as to implement the smart home application through execution of the terminal equipment.

Preferably, connection of the home gateway with the terminal equipment may comprise: the home gateway allocates a communication address for the terminal equipment, and communicates with the terminal equipment according to the communication address.

Preferably, the device may further comprise: a local control terminal, which is connected with the home gateway, and configured to receive a control instruction from a user and to send the control instruction to the home control centre through the home gateway.

Preferably, the device may be connected with a service support platform through a service gateway, wherein the service support platform may be configured to receive a control instruction sent from a user through a remote control terminal and to forward the control instruction to the home control centre through the service gateway and the home gateway.

Preferably, the home gateway is configured to initiate a registration request with the service gateway, which then registers the home gateway; and
preferably, the home control centre is configured to initiate, through the home gateway and the service gateway, a registration request with the service support platform, which then registers the home control centre.

Preferably, the home gateway is configured to perform conversion of a media stream between the home control centre and the terminal equipment.

A system for implementing a smart home application comprises a home gateway, a home control centre, a service gateway and a service support platform, wherein
the home gateway is connected with one or more terminal equipments, and is configured to perform conversion of a message between the home control centre and the terminal equipment and to send the converted message to the home control centre or the terminal equipment, and is further connect with the service gateway to access the smart home application;
the home control centre is configured to execute a smart home service logic according to a received user instruction or a preconfigured task and to send an instruction to one or more terminal equipments through the home gateway so as to implement the smart home application through execution of the terminal equipment;
the service gateway is configured to obtain the smart home application from the service support platform; and
the service support platform is configured to provide the smart home application with relevant service capabilities.

Preferably, the system may further comprise: a smart home application unit, which is configured to provide the smart home application.

A method for implementing a smart home application provided by the above device comprises:
executing, by a home control centre, a smart home service logic according to a received user instruction or a preconfigured task and sending an instruction to one or more terminal equipments through a home gateway so as to control the terminal equipment in implementation of the smart home application.

Preferably, the terminal equipment implementing the smart home application may only involve a local terminal equipment, and the smart home application may be implemented based on a request and a response, wherein
the request may be initiated by an accessing terminal equipment and reach the home control centre through the home gateway; and the home control centre may make the response and notify an accessed terminal equipment in relation to the request; or
the request may be initiated by the accessing terminal equipment, reach the home control centre through the home gateway, and then reach a service support platform through the home gateway and a service gateway; and the response may be made by the service support platform and reach, through the service gateway and the home gateway, the home control centre, which responds to the request of the accessing terminal equipment and notifies the accessed terminal equipment through the home gateway.

Preferably, the terminal equipment implementing the smart home application may involve a local terminal equipment and a remote terminal equipment, and the smart home application may be implemented based on a request and a response between the local terminal equipment and the remote terminal equipment.

Preferably, the method may further comprise: receiving, by a local control terminal, a control instruction from a user and sending the control instruction to the home control centre through the home gateway.

Preferably, the method may further comprise: initiating, by the home gateway, a registration request with a service gateway; and registering, by the service gateway, the home gateway; and
initiating, by the home control centre, a registration request with a service support platform through the home gateway and the service gateway; and registering, by the service support platform, the home control centre.

The device, system and method in the disclosure can implement the smart home application based on unified control of terminal equipment.

### BRIEF DESCRIPTION OF THE DRAWINGS

Fig. 1 is a diagram of a system for implementing a smart home application according to an embodiment of the disclosure;
Fig. 2 is a flowchart of implementing a smart home application according to an embodiment of the disclosure;
Fig. 3 is a flowchart of implementing a smart home application according to another embodiment of the disclosure;
Fig. 4 is a schematic diagram of logical architecture of a home gateway according to an embodiment of the disclosure;
Fig. 5 is a flowchart of implementing a smart home application according to an embodiment of the disclosure;
Fig. 6 is a flowchart of a local terminal equipment accessing another local terminal equipment without participation of a service support platform;
Fig. 7 is a flowchart of a local terminal equipment accessing another local terminal equipment with participation of a service support platform;
Fig. 8 is a flowchart of a local terminal equipment accessing a remote terminal equipment; and
Fig. 9 is a flowchart of a remote terminal equipment accessing a local terminal equipment.

### DETAILED DESCRIPTION

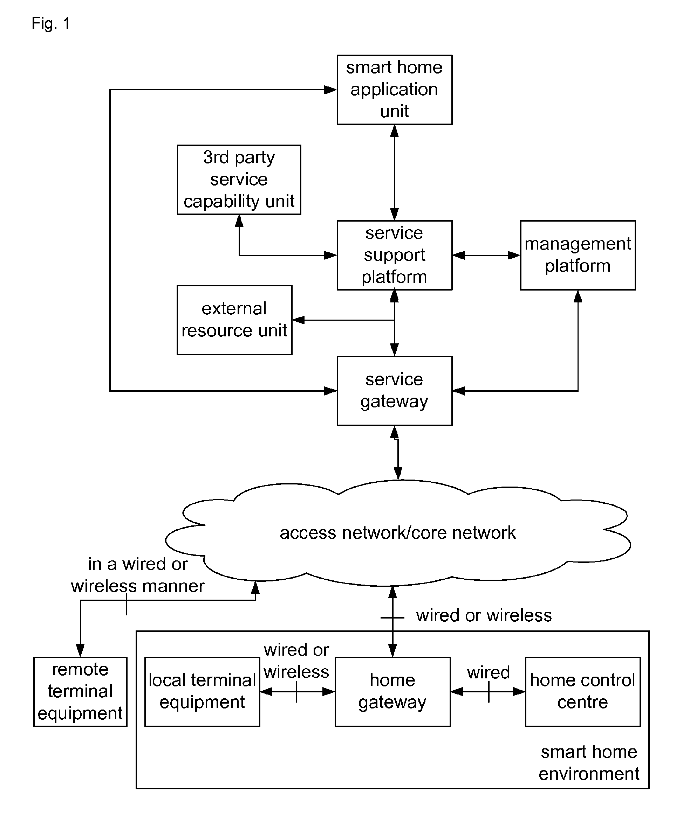

Referring to Fig. 1, it is a diagram of a system for implementing a smart home application according to an embodiment of the disclosure; wherein the system includes a terminal side and a network side which are connected with each other in a wired or wireless manner, and transmission and Session Initiation Protocol (SIP) control are performed by way of IP or radio packet.

Main network elements at the terminal side include:
a home control centre, connected with a home gateway; wherein the home control centre may include sub-modules, for example, a communication module, a terminal management module, a terminal control module, an information storage module, etc., wherein the specific functioning of those is that:
   the communication module interacts with various terminal equipments through the home gateway and receives a control instruction; and supports Internet Protocol Version 6 (IPv6);
   the terminal management module performs information management, parameter configuration, and task operation setup of the terminal equipment;
   the terminal control module may control operation of the terminal equipment according to a configured task or an instruction from a control terminal; obtain presented information of the terminal equipment and achieve coordination of multiple terminal equipments; warn of an abnormal terminal equipment; accept control by a remote terminal equipment; and call an interface provided by a service support platform to obtain various service capabilities; and
   the information storage module collects various information, such as presented information, video information and the like, of a home terminal equipment and locally stores the collected information, and may further perform instant information retrieval or video playback.

Specifically, as a home server, the home control centre is connected with the home gateway by using TCP/IP and controls operation of various terminal equipments through the home gateway, and may also accept, through the home gateway, control by a local control terminal (such as a multifunctional remote controller, a touch screen or the like), as well as accept, through the home gateway and the service gateway, control by a remote control terminal (such as a remote computer, a mobile phone or the like).

In a practical application, the home control centre may be provided together with the home gateway, execute a smart home service logic according to a received instruction of a user or a preconfigured task, and send through the home gateway to one or more terminal equipments an instruction to implement the smart home application through execution of the terminal equipment.

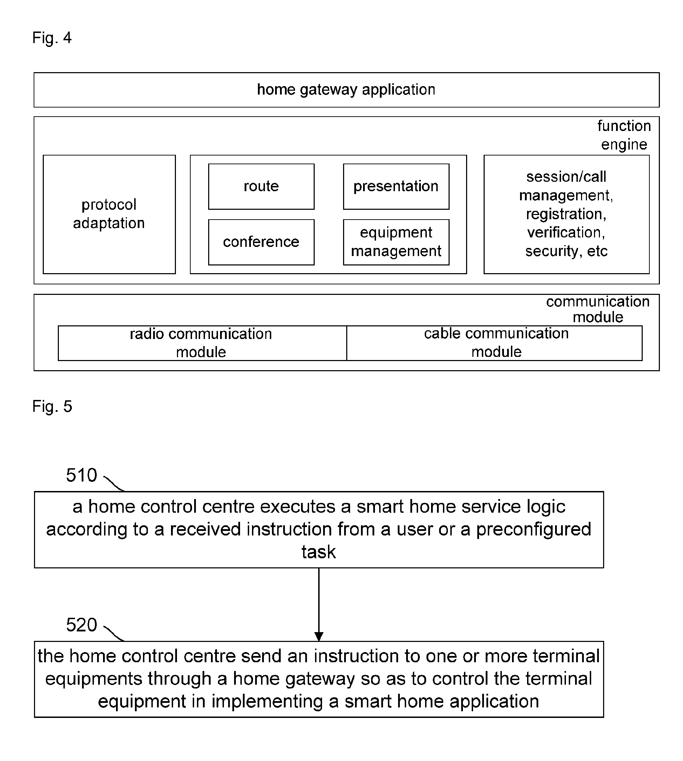

The home gateway, as shown in Fig. 4, may include sub-modules, such as a communication module, a function engine module, and a home gateway application module; wherein the specific functioning of those is that:
the communication module performs both external and internal communication. In the case of external communication, it may be connected with, in a wired or wireless manner, various external networks including a telecommunication network (an immobile network, a mobile network, a broadband access network, etc), the internet, cable TV network, etc.; In the case of internal communication, it may be connected with, in a wired or wireless manner, various appliance equipments, surveillance equipments, and sensors so as to achieve information exchange and cooperation between terminal equipments, as well as access the home control centre and the service gateway; the communication module may further perform Network Address Translation (NAT) traversal and firewall functioning, and may support IPv6.

Functioning of the function engine module includes that:

The function engine module performs protocol adaptation and conversion of a control instruction sent from the home control centre or the control terminal, and may further perform conversion of a media stream sent from the terminal equipment to the home control centre and the like; The function engine module may support SIP.

A presentation module is configured to obtain presented information of the terminal equipment;
a conference module is configured to implement a tri-party or multi-party conference between outside-home terminal equipments and inside-home terminal equipments;
an equipment management module is configured to allocate an address for the terminal equipment connected to the home gateway and to implement automatic upgrading of an equipment.

The home gateway may further implement functions such as session/call management, registration, verification, security, and the like.

The home gateway application module is configured to provide a user interface and the like.

In addition, as a gateway equipment, the home gateway may be connected with various external networks (a Public Switched Telephone Network (PSTN), a Public Land Mobile Network (PLMN), the Internet, Broadcast and the like in a wired manner (such as an Asymmetric Digital Subscriber Line (ADSL) or a fiber), or in a wireless manner (such as 3G, 4G or a Wireless Local Area Network (WLAN)), may implement format conversion of external network data and internal network data (such as an IP-based data packet); may be connected with various appliance equipments, surveillance equipments, and sensors in a wired manner (such as a Local Area Network (LAN)), or in a wireless manner (such as ZigBee/Bluetooth), and may implement data format conversion between terminal equipments within the internal network as well as format conversion with external network data.

Furthermore, the home gateway may allocate a communication address for at least one terminal equipment and establish a connection with the terminal equipment according to the allocated communication address. The home gateway may further perform conversion of a media stream between the home control centre and the terminal equipment.

The terminal equipment performs operations such as information presentation, information collection and uploading, issue of the control instruction, etc.; and may support IPv6. The terminal equipment is divided into two categories: the local terminal equipment or the remote terminal equipment, wherein the local terminal equipment is directly connected with the home gateway, while the remote terminal equipment has to perform information exchange with the home control centre or the local terminal equipment through the service gateway and the home gateway.

Particularly, the terminal equipment may be an appliance, a surveillance equipment, a sensor or the like, is connected with the home gateway in a wired manner (such as an LAN), or in a wireless manner (such as a WLAN or Bluetooth), to perform data collection, uploading, reception of control information, etc. In addition, the terminal equipment includes a smart terminal and a non-smart terminal, wherein the smart terminal may establish a connection with the home control centre through the home gateway and may support SIP, while the non-smart terminal may connect with the home gateway. In control of the non-smart terminal, the home control centre may send a message to the home gateway which then may send, according to the received message, to the non-smart terminal an instruction code to control the non-smart terminal.

It should be noted that in a practical application, a terminal configured to perform equipment control, for example, a multifunctional remote controller, a Personal Digital Assistant (PDA), a mobile phone and the like, may be called a control terminal; while other terminals, for example, a TV, a camera equipment, a sensor and the like, that may be controlled by the control terminal are called home terminals. Thus, terminal equipments involved in a smart home application includes overall two categories: a control terminal and a controlled terminal. The control terminal is configured to send a control instruction, set up terminal configuration and the like, and includes a local terminal equipment (such as a multifunctional remote controller or a touch screen) and a remote terminal equipment (such as a mobile phone or a remote computer).

Main network elements at the network side include:
a service gateway, as a gateway equipment, is capable of obtaining a smart home application from the service support platform and unifying various message formats into formats that can be processed by the service support platform; and is capable of obtaining terminal information through an interface with a management platform.

Specifically, the service gateway may access the service support platform according to a smart home service request and distribute information and the like based on the smart home application. The service gateway may include sub-modules such as a communication module, a function engine module and a service gateway application module, wherein the specific functioning of those is that:
the communication module supports TCP/UDP (user datagram protocol) and the like; supports SIP; supports service gateway cascading; supports IPv6; and implements management of the home gateway.

Functioning of the function engine module includes:
performing protocol adaptation so as to complete conversion and adaptation of message formats of various application layers;
performing message routing so as to complete message routing between multiple service platforms or to a superordinate service support platform; and
completing application connection, status management, and the like.

The service support platform, which may provide a service execution environment; may provide a service capability interface to provide various service capabilities for various smart home applications; and may provide capability of presentation and cooperation.

Specifically, the service support platform is a server that provides the service execution environment for the smart home service and may be connected with various resources of a core network such as a media resource function, a short message centre, and the like; the service support platform supports access of multiple service gateway and may provide various service capabilities for a smart home application; and may be also connected with multiple 3^{rd} party smart home application servers.

The service support platform may obtain presented information of a user by calling an interface provided by a presentation server, and may also complete coordination of a smart home application through a coordination server.

The service support platform may obtain, during executing a service, user information, subscription information, and terminal information through an interface with the management platform.

The management platform, which may be provided together with the other equipments, and is configured to manage home gateway information, the user information, user subscription information, and the like.

A smart home application unit, which may provide various smart home applications that may be provided by a 3^{rd} party and be used by a remote terminal or the home control centre to call an operation interface provided by the application or perform voice interaction.

Specifically, the smart home application unit may be provided as a smart home application server, is connected to the service support platform and capable of providing a specific application and service of the smart home, and may call the interface provided by the service support platform to obtain various service capabilities as well as distribute various data through the service gateway. A specific smart home application may be developed by a 3^{rd} party or directly provided by the system.

An external resource unit, is usually an optional equipment, and may provide additional resources for the service support platform to use, for example a media server that may assist the service support platform in audio recording, video recording and the like.

A 3^{rd} party service capability unit, is usually an optional equipment, and may provide additional service capabilities for the service support platform to use, for example capability to position, capability to present, and the like.

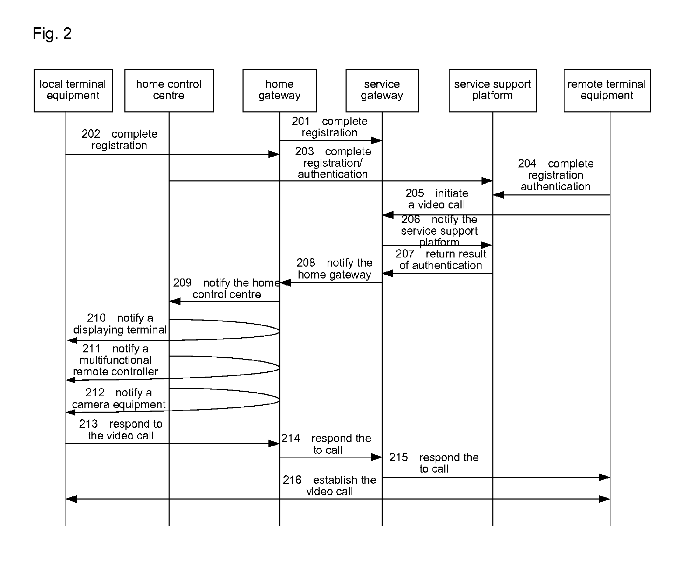

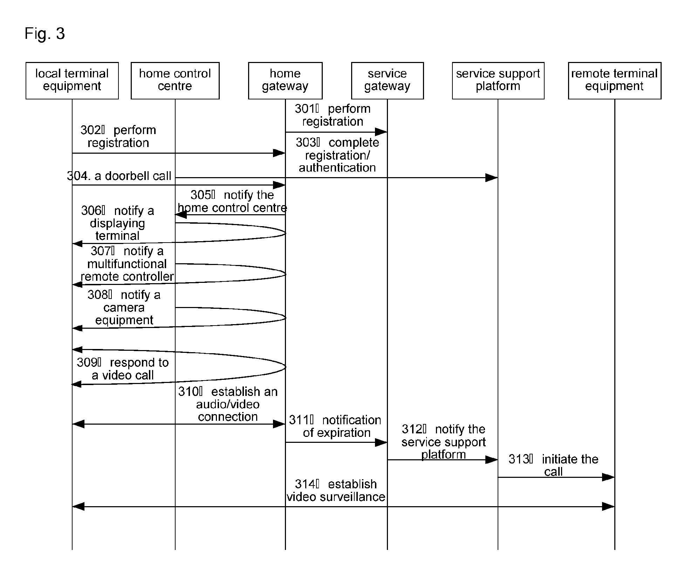

The system shown in Fig. 1 may implement a flow shown in Fig. 2 and Fig. 3. Referring to Fig. 2, which is a flowchart of an embodiment of the disclosure for implementing a smart home application, wherein it includes the following steps.

Step 201: the home gateway completes registration with the service gateway, wherein the registration includes:
Step 201 A: the user activates a smart home service and the management platform stores the user information.
Step 201B: the home gateway initializes and accesses the external network to establish a data link connection.
Step 201C: the home gateway sends an INVITE message of SIP to the service gateway, which responds with a 2000K message, and the home gateway sends an ACK message to the service gateway to establish a TCP/UDP connection with the service gateway.
Step 201 D: the home gateway sends to the service gateway an INFO message including a registration message of the home gateway: a user identifier, a password, a home gateway identifier, an SIP address, and the like. The INFO message is usually encrypted.
Step 201 E: the service gateway calls an interface provided by the management platform to perform user authentication.
Step 201 F: when the user passes the authentication, the service gateway returns to the home gateway a 2000K message including the result of the registration: an indication of success or failure of registration, reason of failure, and the like.

Step 202: a local terminal equipment completes registration with the home gateway.

The registration operation of this step generally includes that:
A TV set as a local terminal equipment completes registration with the home gateway; a multifunctional remote controller, as a local control equipment as well as a terminal equipment, completes registration with the home gateway; A camera equipment as a local terminal equipment completes registration with the home gateway. The above process of registration specifically includes that:
   a physical connection of the TV set with the home gateway is established in a wired manner; a connection of the multifunctional remote controller with the home gateway is established in infrared or Bluetooth manner; and a connection of the camera equipment with the home gateway is established in a wired or Bluetooth manner.

The multifunctional remote controller sends an authentication message to the home control centre after establishing a data link with the home gateway. After the home control centre verifies the authentication, the multifunctional remote controller establishes a TCP/UDP connection with the home control centre.

After starting to work normally, the above terminal equipments may send, through the home gateway, status information to the home control centre, which records the received status information. For simple equipments incapable of sending status information, the home gateway may take the initiative to send status information to the home control centre after the TCP/UDP connection is established.

Step 203: the home control centre completes, through the home gateway and the service gateway, registration with the service support platform, wherein the registration includes:
Step 203A: the home control centre connects with the home gateway and establishes a data link connection.
Step 203B: the home control centre sends to the service support platform the INVITE message of SIP including the user registration information such as the user name, the password, the authority, and the like.
Step 203C: the service support platform calls the interface provided by the management platform to process the user registration after receiving the user registration information, and allocates a relevant authority for the user after the registration succeeds; and returns to the home control centre a 2000K message including the result of the registration: an indication of success or failure of registration, reason of failure, and the like.
Step 203D: the home control centre sends an ACK message.

Step 204: a remote terminal equipment completes registration with the service support platform, wherein the registration includes:
Step 204A: the remote terminal equipment connects with the service support platform to establish a data link connection.
Step 204B: the remote terminal equipment sends to the service support platform the INVITE message of SIP including application registration information such as an ID of the application, a name of the application, authority, and the like.
Step 204C: the service support platform processes the registration after receiving the application registration information, and returns, after completing the operation, to the remote terminal equipment a 2000K message including the result of the registration: an indication of success or failure of registration, reason of failure, and the like.
Step 204D: the remote terminal equipment sends an ACK message.

Step 205: the user uses the smart home service with the remote terminal equipment and initiates a Voice over Internet Protocol (VoIP) video call, and the remote terminal equipment sends the call message to the service gateway. Specific process of the call initiation includes:
Step 205A: the user connects with the smart home application unit through a remote terminal equipment such as a computer or a mobile phone to establish a data link connection.
Step 205B: the user activates an interface or voice interaction provided by the smart home application unit and inputs the user name and password.
Step 205C: the smart home application unit sends to the service support platform an INVITE message of SIP including the user authentication information such as the user name and the password.
Step 205D: the service support platform calls the interface provided by the management platform to process the user authentication after receiving the user authentication information, and returns, after the authentication succeeds, to the smart home application unit a 2000K message including the result of the authentication: an indication of success or failure of authentication, reason of authentication, and the like.
Step 205E: the smart home application unit sends an ACK message after learning that the authentication succeeds; and the user initiates a VoIP video call with the remote terminal equipment and send to the service gateway an INVITE message of SIP including an SIP address and the like.

Step 206: the service gateway sends, after receiving the INVITE message, to the service support platform an INVITE message to notify the service support platform to process a follow-up billing event and the like.

Step 207: the service support platform completes the operation and responds with a 2000K message.

Step 208: the service gateway sends, after receiving the 2000K message, to the home gateway an INVITE message to notify the home gateway that a video call is initiated.

Step 209: the home gateway sends, after receiving the INVITE message, to the home control centre an INVITE message to notify the home control centre of the call message.

Step 210: the home control centre notifies, after receiving the INVITE message, the TV set through the home gateway. As the displaying terminal in the local terminal equipments, the TV set displays the call scene according to an instruction of the home control centre.

Step 211: the home control centre sends an INVITE message to the multifunctional remote controller through the home gateway.

Step 212: the home control centre notifies, through the home gateway, the camera equipment, which performs an adjustment according to an instruction of the home control centre.

Steps 210 to 212 may generally be called terminal equipment initialization.

Step 213: the multifunctional remote controller returns to the home gateway a 2000K message to respond to the call.

It is to be noted that the step is generally initiated based on control of the home control centre. In this step and a follow-up step, the home control centre can still perform coordination and management of relatively independent operation of a local terminal equipment or cooperation between multiple equipments implementing the smart home application.

Step 214: the home gateway forwards the 2000K message to the service gateway to respond to the call.

Step 215: the service gateway forwards the 2000K message to the remote terminal equipment to respond to the call.

Step 216: the remote terminal equipment sends, after receiving the 2000K message, an ACK message, and the video call is established.

Referring to Fig. 3, which is a flowchart of another embodiment of the disclosure for implementing the smart home application, the flow includes:

Steps 301 to 303: the home gateway completes registration with the service gateway; the local terminal equipment completes registration with the home gateway; and the home control centre completes registration with the service support platform through the home gateway and the service gateway.

The operational principle of a respective step in steps 301 to 303 is similar to that of a corresponding step in steps 201 to 203, and the difference is that a local terminal equipment in Fig. 3 further includes an entrance guard system.

Step 304: a doorbell call is initiated, a doorbell as a local terminal equipment notifies the home gateway of the doorbell call.

Step 305: the home gateway send to the home control centre an INVITE message of SIP including a terminal ID, a terminal type, a call type, and the like.

Step 306: the home control centre notifies, after receiving the INVITE message, the TV set through the home gateway. As the displaying terminal in the local terminal equipments, the TV set displays the call scene according to an instruction of the home control centre.

Step 307: the home control centre sends an INVITE message to the multifunctional remote controller through the home gateway.

Step 308: the home control centre notifies, through the home gateway, the camera equipment, which performs an adjustment according to an instruction of the home control centre.

Steps 306 to 308 may generally be called terminal equipment initialization.

Step 309: the local terminal equipment returns to the home gateway a 2000K message to respond to the call. The home gateway forwards the 2000K message to a local terminal equipment to forwards the response.

It is to be noted that the step is generally initiated based on control of the home control centre. In this step and a follow-up step, the home control centre can still perform coordination and management of relatively independent operation of a local terminal equipment or cooperation between multiple equipments implementing the smart home application.

Step 310: the local terminal equipment establishes, after receiving the 2000K message forwarded by the home gateway, an audio/video connection. Specifically, the TV set establishes a video connection to display, and an interphone equipment establishes an audio connection to perform voice interaction.

Step 311: when the interphone equipment receives no response after expiration of the doorbell call, the home gateway then notifies the service gateway of the circumstance. The specific operation includes:
Step 311A: the entrance guard system sends, after learning the expiration of the doorbell call, an expiration message to the home gateway.
Step 311B: the home gateway sends to the home control centre an INVITE message including a terminal ID, a terminal type, an expiration type, and the like.
Step 311C: the home control centre returns a 2000K message.
Step 311 D: the home control centre sends to the home gateway an INVITE message including a call message.
Step 311 E: the home gateway forwards the INVITE message to the service gateway.
Step 312: the service gateway sends to the service support platform an INVITE message to notify the service support platform of the call expiration.
Step 313: the service support platform searches, after receiving the INVITE message, for the user information corresponding to the remote terminal equipment and sends, according to the found user information, through the smart home application unit, to the user's mobile phone as the remote terminal equipment an INVITE message to initiate a call with the user's mobile phone.
Step 314: the remote terminal equipment such as the user's mobile phone establishes a video surveillance with the local terminal equipment.

Specifically, the remote terminal equipment such as the user's mobile phone returns, after responding, a 2000K message to the service support platform, which returns a 2000K message to the service gateway, which forwards, through the home gateway, the 2000K message to the home control centre. After receiving the 2000K message, the home control centre controls the remote terminal equipment such as the user's mobile phone to establish a video connection with a local terminal equipment including the TV set and the camera equipment so that the user sees a visitor by using the user's mobile phone.

It may be seen from what described above that, in terms of operational thoughts, the flow of the smart home application that can be implemented by the system in Fig. 1 is as shown in Fig. 5. Referring to Fig. 5, which is a flowchart of the disclosure for implementing a smart home application, wherein it includes the following steps:
Step 510: the home control centre controls, according to a smart home application that needs to be implemented, through the home gateway, a terminal equipment to execute initialization.
Step 520: after the terminal equipment completes the initialization, the home control centre controls, through the home gateway, the terminal equipment to implement the smart home application.

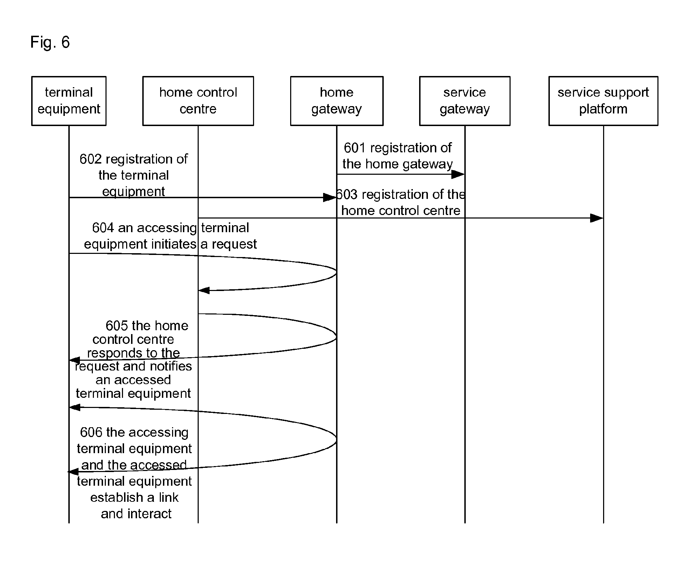

In addition to implementing the flow shown in Fig. 2 and Fig. 3, the architecture shown in Fig. 1 can further implement a flow as shown in Fig. 6 to Fig. 9.

Referring to Fig. 6, which is a flowchart of a local terminal equipment accessing another local terminal equipment without participation of a service support platform, the flow includes the following steps:
Steps 601 to 603: a terminal equipment, the home gateway, and the home control centre respectively complete initialization and registration.
Step 604: the terminal equipment that initiates an access is taken as the accessing terminal equipment and initiates a request with the home control centre through the home gateway.
Step 605: the home control centre responds to the request of the accessing terminal equipment and notifies, through the home gateway, an accessed terminal equipment aimed at by the request.
Step 606: the accessing terminal equipment receives a response and the accessed terminal equipment receives a notification; the accessing terminal equipment establishes a link with the accessed terminal equipment and performs message interaction.

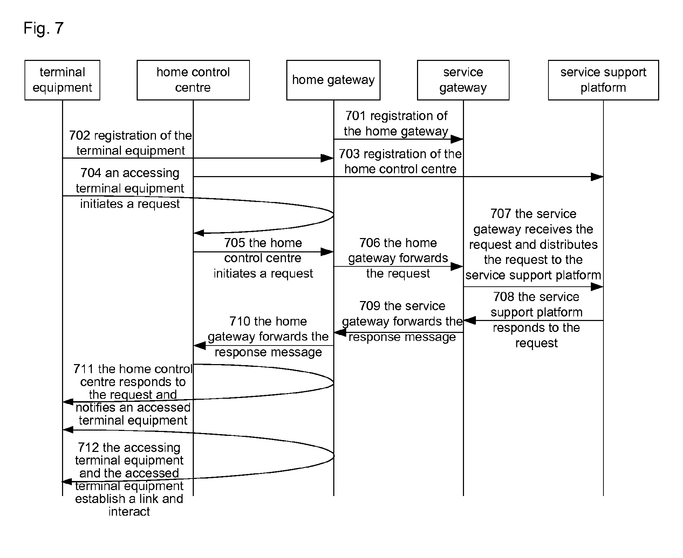

Referring to Fig. 7, which is a flowchart of a local terminal equipment accessing another local terminal equipment with participation of a service support platform, the flow includes the following steps:
Steps 701 to 703: a terminal equipment, the home gateway, and the home control centre respectively complete initialization and registration.
Step 704: an accessing terminal equipment initiates a request to the home control centre through the home gateway.
Steps 705 to 707: the home control centre forwards the request to the service support platform through the home gateway and the service gateway.
Steps 708 to 710: the service support platform responds to the request and forwards a response message to the home control centre through the service gateway and the home gateway based on the response.
Step 711: the home control centre responds to the request of the accessing terminal equipment and notifies an accessed terminal equipment through the home gateway.
Step 712: the accessing terminal equipment receives a response and the accessed terminal equipment receives a notification; the accessing terminal equipment establishes a link with the accessed terminal equipment and performs message interaction.

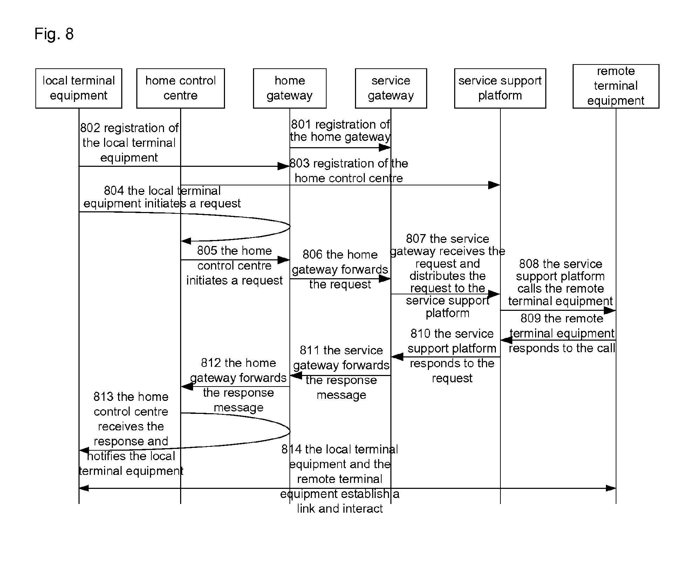

Referring to Fig. 8, which is a flowchart of a local terminal equipment accessing a remote terminal equipment, the flow includes:
Steps 801 to 803: a local terminal equipment, the home gateway, and the home control centre respectively complete initialization and registration.
Step 804: the local terminal equipment initiates a request to the home control centre through the home gateway.
Steps 805 to 808: the home control centre forwards the request to the service support platform through the home gateway and the service gateway, and the service support platform calls a remote terminal equipment.
Steps 809 to 812: the remote terminal equipment responds to the call of the service support platform, the service support platform sends to the service gateway a response to the request and forwards a response message to the home control centre through the service gateway and the home gateway based on the response.
Step 813: the home control centre responds to the request of the local terminal equipment through the home gateway.
Step 814: the local terminal equipment receives the response and establishes a link with the remote terminal equipment and performs message interaction.

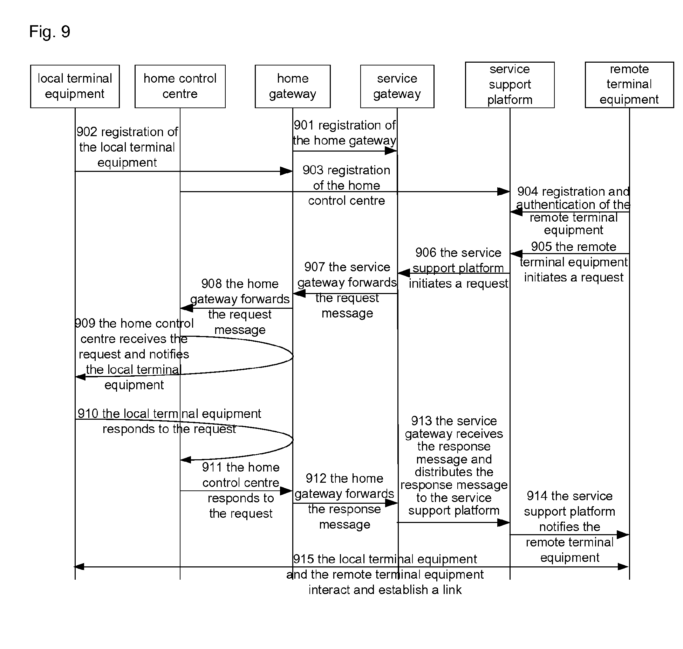

Referring to Fig. 9, which is a flowchart of a remote terminal equipment accessing a local terminal equipment, the flow includes
Steps 901 to 903: a local terminal equipment, the home gateway, and the home control centre respectively complete initialization and registration.
Step 904: a remote terminal equipment registers and authenticates with a service platform.
Steps 905 to 908: the remote terminal equipment initiates a request, and the service support platform receives the request and forwards the request to the home control centre through the service gateway and the home gateway.
Steps 909: the home control centre receives the request and notifies the local terminal equipment through the home gateway.
Step 910: the local terminal equipment responds to the request and notifies the home control centre through the home gateway.
Steps 911 to 914: the home control centre receives the response and notifies the service support platform of the response through the home gateway and the service gateway, and the service support platform notifies the remote terminal equipment.
Step 915: the remote terminal equipment receives a response and establishes a link with the local terminal equipment and performs message interaction.

It can be seen that regardless of the device, the system, or the method, the techniques of the disclosure for implementing a smart home application can implement the smart home application based on unified control of terminal equipments, increasing service expandability and capability of network integration. Specifically, the problem of network integration is solved, and external communication of any inside-home equipment is consistently performed through the home gateway; the problem of service integration is solved, and multimedia communication, IPTV, mobile internet applications, applications of the internet of things can all be completed. The problem of terminal expansion is solved, and content of mobile internet application and the internet of things becomes increasingly richer, more and more types of terminal equipments are supported, and expansion and upgrading can be easily done.

What described above are merely preferred embodiments of the disclosure and are not intended to limit the scope of the disclosure. Any modification, equivalent replacement, and improvement within the spirit and principle of the disclosure shall fall within the scope of the disclosure.

## Claims

1. A device for implementing a smart home application, comprising a home gateway and a home control centre, wherein
the home gateway is connected with one or more terminal equipments, and is configured to perform conversion of a message between the home control centre and the terminal equipment and to send the converted message to the home control centre or the terminal equipment; and
the home control centre is configured to execute a smart home service logic according to a received user instruction or a preconfigured task and to send an instruction to one or more terminal equipments through the home gateway so as to implement the smart home application through execution of the terminal equipment.

2. The device according to claim 1, wherein connection of the home gateway with the terminal equipment comprises: the home gateway allocates a communication address for the terminal equipment, and communicates with the terminal equipment according to the communication address.

3. The device according to claim 1 or 2, further comprising: a local control terminal, which is connected with the home gateway, and configured to receive a control instruction from a user and to send the control instruction to the home control centre through the home gateway.

4. The device according to claim 1 or 2, wherein the device is connected with a service support platform through a service gateway, wherein the service support platform is configured to receive a control instruction sent from a user through a remote control terminal and to forward the control instruction to the home control centre through the service gateway and the home gateway.

5. The device according to claim 4, wherein
the home gateway is further configured to initiate a registration request with the service gateway, which then registers the home gateway; and
the home control centre is further configured to initiate, through the home gateway and the service gateway, a registration request with the service support platform, which then registers the home control centre.

6. The device according to claim 1, wherein the home gateway is further configured to perform conversion of a media stream between the home control centre and the terminal equipment.

7. A system for implementing a smart home application, comprising a home gateway, a home control centre, a service gateway and a service support platform, wherein
the home gateway is connected with one or more terminal equipments, and is configured to perform conversion of a message between the home control centre and the terminal equipment and to send the converted message to the home control centre or the terminal equipment, and is further connect with the service gateway to access the smart home application;
the home control centre is configured to execute a smart home service logic according to a received user instruction or a preconfigured task and to send an instruction to one or more terminal equipments through the home gateway so as to implement the smart home application through execution of the terminal equipment;
the service gateway is configured to obtain the smart home application from the service support platform; and
the service support platform is configured to provide the smart home application with relevant service capabilities.

8. The system according to claim 7, further comprising: a smart home application unit, which is configured to provide the smart home application.

9. A method for implementing a smart home application provided by the device according to claim 1, comprising:
executing, by a home control centre, a smart home service logic according to a received user instruction or a preconfigured task and sending an instruction to one or more terminal equipments through a home gateway so as to control the terminal equipment in implementation of the smart home application.

10. The method according to claim 9, wherein the terminal equipment implementing the smart home application only involves a local terminal equipment, and the smart home application is implemented based on a request and a response, wherein
the request is initiated by an accessing terminal equipment and reaches the home control centre through the home gateway; and the home control centre makes the response and notifies an accessed terminal equipment in relation to the request; or
the request is initiated by the accessing terminal equipment, reaches the home control centre through the home gateway, and then reaches a service support platform through the home gateway and a service gateway; and the response is made by the service support platform and reaches, through the service gateway and the home gateway, the home control centre, which responds to the request of the accessing terminal equipment and notifies the accessed terminal equipment through the home gateway.

11. The method according to claim 9, wherein the terminal equipment implementing the smart home application involves a local terminal equipment and a remote terminal equipment, and the smart home application is implemented based on a request and a response between the local terminal equipment and the remote terminal equipment.

12. The method according to any one of claims 9 to 11, further comprising:
receiving, by a local control terminal, a control instruction from a user and sending the control instruction to the home control centre through the home gateway.

13. The method according to any one of claims 9 to 11, further comprising:
initiating, by the home gateway, a registration request with a service gateway; and
registering, by the service gateway, the home gateway; and
initiating, by the home control centre, a registration request with a service support platform through the home gateway and the service gateway; and registering, by the service support platform, the home control centre.
